(19) **Europäisches Patentamt**
**European Patent Office**
**Office européen des brevets**

(11) **EP 2 102 817 B1**

(12) **EUROPEAN PATENT SPECIFICATION**

(45) Date of publication and mention
of the grant of the patent:
**11.04.2012 Bulletin 2012/15**

(51) Int Cl.:
**G06T 7/00** *(2006.01)*   **G06T 7/40** *(2006.01)*

(21) Application number: **07846416.1**

(22) Date of filing: **14.12.2007**

(86) International application number:
**PCT/DK2007/000546**

(87) International publication number:
**WO 2008/071194 (19.06.2008 Gazette 2008/25)**

(54) **METHOD FOR UNBIASED ESTIMATION OF THE TOTAL AMOUNT OF OBJECTS BASED ON NON UNIFORM SAMPLING WITH PROBABILITY OBTAINED BY USING IMAGE ANALYSIS**

VERFAHREN ZUR UNVORBETONTEN SCHÄTZUNG DER GESAMTMENGE VON OBJEKTEN AUF DER BASIS UNGLEICHFÖRMIGER STICHPROBEN MIT DURCH VERWENDUNG VON BILDANALYSE ERHALTENER WAHRSCHEINLICHKEIT

PROCÉDÉ POUR UNE ESTIMATION SANS BIAIS DE LA QUANTITÉ TOTALE D'OBJETS SUR LA BASE D'UN ÉCHANTILLONNAGE NON UNIFORME AVEC UNE PROBABILITÉ OBTENUE À L'AIDE D'UNE ANALYSE D'IMAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 DK 200601646**

(43) Date of publication of application:
**23.09.2009 Bulletin 2009/39**

(73) Proprietor: **Aarhus Universitet**
**8000 Aarhus C (DK)**

(72) Inventors:
- **GARDI, Jonathan Eyal**
**4970 Rodbyhavn (DK)**
- **NYENGAARD, Jens Randel**
**8260 Viby (DK)**
- **GUNDERSEN, Hans Jørgen Gottlieb**
**8362 Hørning (DK)**

(74) Representative: **Høiberg A/S**
**St. Kongensgade 59 A**
**1264 Copenhagen K (DK)**

(56) References cited:
**EP-A- 1 246 120     US-A- 5 754 688**

- **GARDI J E ET AL: "Using biased image analysis for improving unbiased stereological number estimation - a pilot simulation study of the smooth the smooth" JOURNAL OF MICROSCOPY, OXFORD, GB, vol. 222, no. 3, June 2006 (2006-06), pages 242-250, XP007904033 ISSN: 0022-2720 cited in the application**
- **DORPH-PETERSEN, K.-A., GUNDERSEN, H.J.G., JENSEN, E.B.V.: "Non-uniform systematic sampling in stereology" JOURNAL OF MICROSCOPY, vol. 200, no. 2, November 2000 (2000-11), pages 148-157, XP007904095**

Printed by Jouve, 75001 PARIS (FR)

**Description**

FIELD OF THE INVENTION

The present invention relates to a method for estimating structural content, for example the number of cancer cells in a tissue slice. Especially, the invention relates to a method for unbiased estimation of numbers or amounts of objects, the method comprising the steps of claim 1.

BACKGROUND OF THE INVENTION

Quantifying structure in biological tissue is one of the important tasks in modem medicine and life science research and development. Histological examinations often require analysis by microscopy of a large number of sliced tissue biopsies. Preferably the results should be of objective and quantitative nature rather than subjective and qualitative. Still, the processing must not be too time-consuming, and therefore there is a need for automating methods of quantitative microscopy of tissue sections.

Quantitative histomorphometric analysis has in some instances been based on tessellating the image of a tissue section into a number of sectors. A subset of sectors is sampled and presented to the user, who quantifies the relevant objects in all the presented sectors. From these measures, the total number or amount of objects is estimated for the entire image.

Commonly, the sectors are sampled in a systematic, uniformly random sampling (SURS) design. The SURS method has been improved by (Gundersen, 2002) by the introduction of the smooth fractionator. This improvement has been investigated further in (Gardi *et al.* 2006) by applying simulations for computer aided stereology in different object distributions. Each sector is given a weight related to the expected count in a sector. The weight assignment is based on any possible correlation between the sector's potential count and its physical size or colour. In (Gardi *et al.* 2006), the assigned weight is only used for reordering of the sectors according to the smoothing protocol before the actual SURS. The smoothing protocol does not change the fact that all sectors have a constant (uniform) sampling probability.

The disadvantage of the above methods is that they require substantial work, why it would be desirable to improve the methods to reduce work load and still give precise results.

A general image analysis technique, primarily for character and word identification, is disclosed in European patent application EP526197. This method is unsuitable for counting objects and cannot be applied successfully for biological cell counting purposes. When this method is used for size estimation of object, it has the disadvantage of being strongly biased, which is undesired in connection with biological cell investigation. Studier for non-uniform systematic sampling designs in stereology were also presented (Dorph-Peterren et al. 2000).

DESCRIPTION / SUMMARY OF THE INVENTION

The objective of the invention is to provide a more efficient method for unbiased estimation of the total amount of objects, for example, in tissue samples. A further objective of the invention is to provide a method generally suited for quantification of objects in images, including microscope, satellite and telescope images, all viewed at suitable magnifications.

This objective is achieved by a method for unbiased estimation of structural content, for example numbers or amounts or both, of objects, the method comprising the steps of claim 1.

Furthermore, the method involves that the sampling of the subset of sectors is performed in accordance with a random sampling criterion using a non-uniform probability that is positively related to the likelihood of object presence in a sector.

According to the invention, an image is partitioned into sectors, and only a minor number - a subset - of these sectors is sampled automatically, typically by using computer image analysis programs. The selection of sectors for closer inspection depends on a random sampling criterion. Different random sampling criteria are mentioned in prior art literature, however, the novel feature is that the probability for selection of a sector is dependent on the likelihood of the presence of objects in the sector. For example, if cancer cells in a tissue section are stained blue, blue areas of the microscopy image of the tissue section represent tissue, which has a large likelihood of containing cancer cells. Areas with pronounced blue colour are, thus, given a large sampling probability, whereas areas with little blue are assigned a smaller sampling probability.

This is an improvement over (Gardi *et al.* 2006), in as much as (Gardi *et al.* 2006) only uses the weight for the smoothing but uses a uniform (constant) sampling probability.

The term structural content refers not only to number or amount of objects, but also covers other parameters, for example, volume, length, perimeters, and/or surface areas. The image analysis features indicating the objects in the image are discernable by the image apparatus, for example a microscope, and may also be visually discernable by the human eye when using a microscope.

Once the amount of objects is found in the selected sectors, the total structural content, for example total amount, of objects in the entire image or section is estimated taking into regard the sampling probability of each sector. Thus, the method according to the invention increases efficiency and saves manpower, because it provides the user with the sectors that are more likely to have objects, but still provides unbiased estimate of total number of objects.

Moreover, the method allows two unique measures of its precision without any additional effort-unique because that is not possible for any of the efficient alternatives (SURS and Smooth fractionator).

The first measure of precision is direct CE estimation (CE=Coefficient of Error). The intended sample of n sectors is split into two sampling tasks of size n/2. The two sampling tasks are strictly independent. The resulting two estimates provide an unbiased estimate of the precision of the mean estimate by calculating the standard error of the mean divided by the mean (i.e. SEM/mean) of the two independent half size estimates. Alternatively, more than two sampling tasks can be performed.

The second measure of precision, called efficiency relative to simple random sampling, is based on the fact that sampling with the method has a known probability for each sector. The known amount of structure or image feature in each sector, sampled with a known probability, allows the computation of the mean amount and its variability in all sectors. This, in turn, allows the computation of the precision if the classical simple random sampling is used. Comparing this to the above direct CE estimate finally results in an estimate of the efficiency of the method relative to that of simple random sampling.

Both of the above measures of precision may be accumulated over several images or tissue sections for better stability.

In a practical embodiment, the method comprises

- defining criteria for specific types of image analysis features, the image analysis features being indicative of the objects,
- by computerised image analysis automatically analysing the sectors and in a computer program assigning a weight factor $z_i$ to each analysed sector, the weight factor being positively related, for example proportional, to the total structural content (for example total number or total amount, or intensity or goodness) of the image analysis features in the sector,
- in a computer program, sampling a number of sectors according to a random sampling criterion, wherein the probability for sampling of a specific sector is proportional to the weight factor $z_i$ for the specific sector.

Then, the method further involves measuring, with an accuracy fitting the purpose of the analysis, the number or the amount $x_i$ of the specific type of structure or image components or features in each of the sampled sectors.

Quantification of tissue properties is improved using the general method according to the invention - in the following called the proportionator sampling and estimation procedure - including automatic image analysis and non-uniform sampling with probability proportional to size (PPS). The complete region of interest is partitioned into fields of view, and every field of view is given a weight $z_i$ (the size) proportional to the total structural content, for example number or amount of requested image analysis features in it; if the number of sectors is very large (more than several thousands) only a smaller sample (more than several hundreds), taken with known uniform probability using e.g. SURS, need to have weights assigned to all sectors. The fields of view sampled with known probabilities proportional to individual weight are the only ones seen by the inspecting person or measuring device who/which provides the correct count. Even though the image analysis and automatic feature detection is clearly biased, the strict unbiasedness of the estimator only depends on the correctness of the measure of $x_i$.

In a preferred embodiment, the random sampling criterion is the Systematic Uniform Random Sampling (SURS). Advantageously, the method implies the steps of calculating an accumulated weight Z for all sectors, selecting a sample size n, and setting the SURS period for sampling to Z/n. Furthermore, for example before calculating the accumulated weight Z, the sectors may be arranged for sampling in accordance with the Smooth Fractionator based on the weights of the sectors.

Preferably, a non-uniform sampling probability $p_i$ is assigned to each sector, wherein $p_i$ is equal to the weight factor $z_i$ divided by the SURS period Z/n. The subset of sectors is may be sampled by using SURS on the accumulated weight factors $z_i$ in order to sample the sectors according to their probability. Furthermore, the Horvitz-Thompson estimator is used with summing $x_i/p_i$ for the subset of sectors in order to estimate the total structural content, for example the total number or the total amount, of objects.

Optionally, the criteria for specific types of image analysis features is a colour criteria represented by a range of numerical values, where each numerical value represents a colour and its saturation. Optionally, the colour may be represented by a defined volume, for example a sphere or a cube, in a three dimensional colour space, the dimensions in the colour space each given by numerical values for the saturation of red, green and blue. Alternatively or in addition, the criteria may imply a morphology criteria or a contextual criteria. For example, a morphology criteria is represented by a range of numerical values, where each numerical value represents a structural characteristic and its degree of contribution to formation of a particular local shape, e.g. to roundness or elongation. For example, a contextual criteria represented by a range of numerical values, where each numerical value represents a positional characteristic, typically a distance to a nearest neighbouring structure.

Applications of the inventions are numerous. The preferred application of the invention is the fields of medicine and biology, where the object is a cell and the image a micrograph of a tissue section. However, the invention is of a more general type and may be used in other fields than microscopy, for example, the image/picture may be one or an aggregate of satellite image(s) or aerial photo(s) of a geographical region, in which certain selected objects, such as trees, crops, vehicles or certain type of buildings are to be estimated in size and/or number.

In microscopic applications, the initial image analysis is often performed on low-magnification images of stained tissue sections. The low magnification implies a certain depth for the field of view, which implies that the analysed sector is not entirely of two-dimensional (2D) nature, but resembles a three-dimensional (3D) structure due to a certain thickness of the tissue section. The estimation of the number or amount of objects in a sampled sector, in some instances, can be done by manual or computer-assisted image analysis (2-D), and in other cases, must be done by volumetric measurements (3-D), for example, using stereological principles, such as including an optical disector. Typically, the latter will require the on-line use of a microscope for scrolling in the z-axis and the use of computer-assisted stereology tools.

In addition, the following aspects should be considered. The initial image analysis may not always be designed to identify the presence of objects directly, e.g. stained, round cancer cells. Though, in many cases the objects themselves are characteristically stained or have a distinguishable morphology, the initial image analysis could as well be used to find features which are associated with the presence of the objects, e.g. newly formed, stained and elongated blood vessels. Thereby the result of the initial image analysis will be just an indirect measure of the likelihood of the presence of the objects. E.g. the estimation of the number of cancer cells will be based on sampling with a likelihood that is higher for sections near a stained, elongated vessel.

SHORT DESCRIPTION OF THE DRAWINGS

The invention will be explained in more detail with reference to the drawing, where

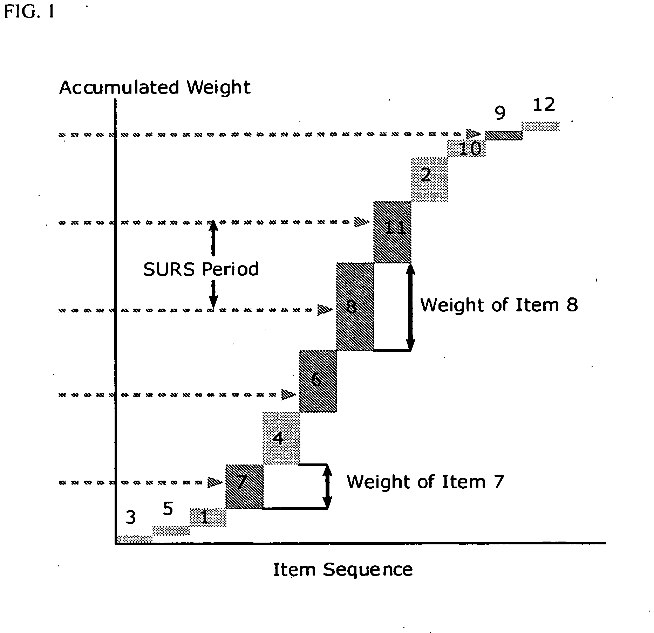

FIG. 1    illustrates the proportionator sampling. The ordinate shows the accumulated weights. Sampling on the ordinate is systematic uniform random sampling, after a smooth fractionator arrangement of the fields of view (sectors) according to their weight. The sampled fields of view are marked with darker color,

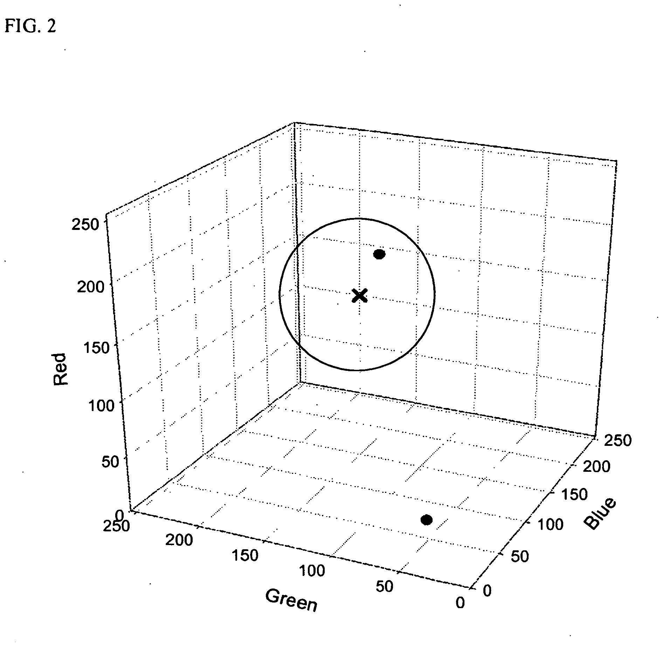

FIG. 2    illustrates the weight assignment. Voxels are mapped in 3D color space of red, green and blue. X indicates the requested color. ● indicates two examples of image voxels, the one inside the sphere contributes to the weight, and the other one is neglected;

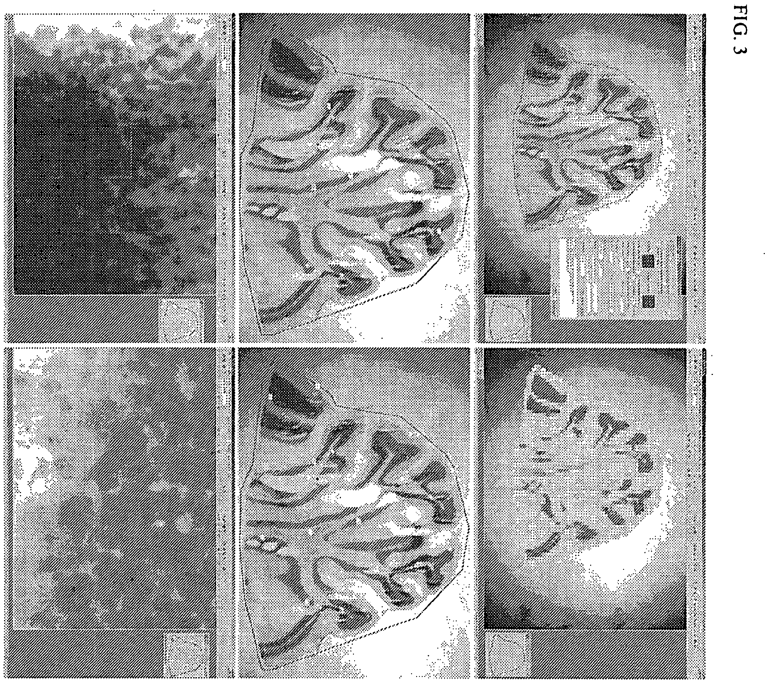

FIG. 3    shows a first example, where the total number of granule cells in rat cerebellum is estimated;

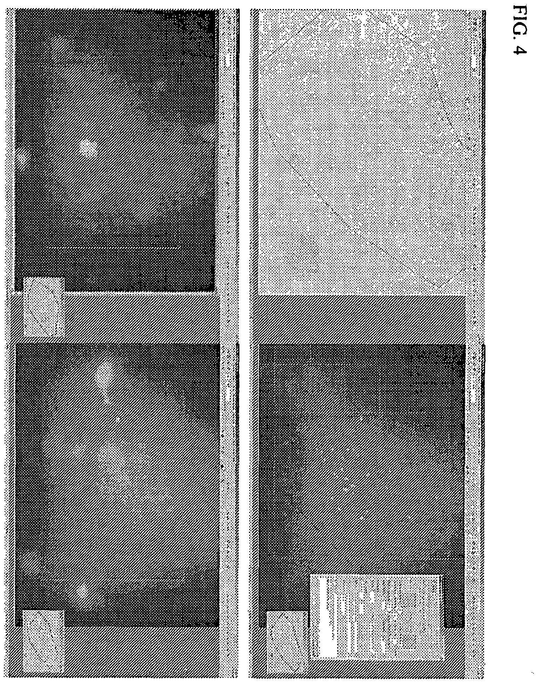

FIG. 4    shows a second example, where the total number of GFP orexin neurons in mice brain is estimated;

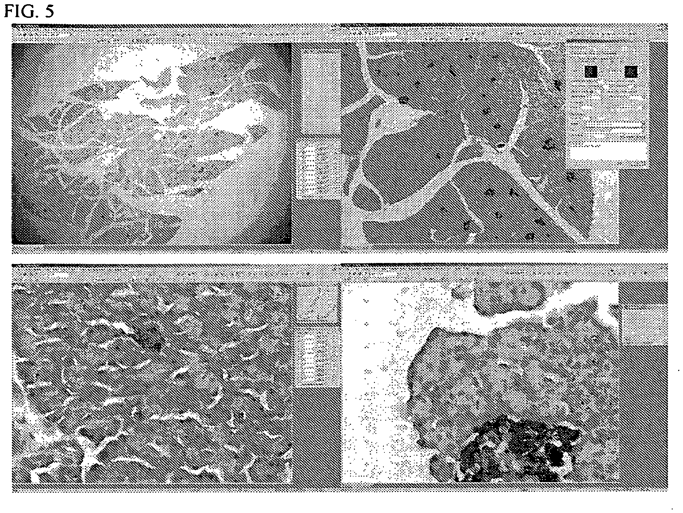

FIG. 5    shows a third example, where the area of $\beta$ cells and the total tissue in dog pancreas is estimated;

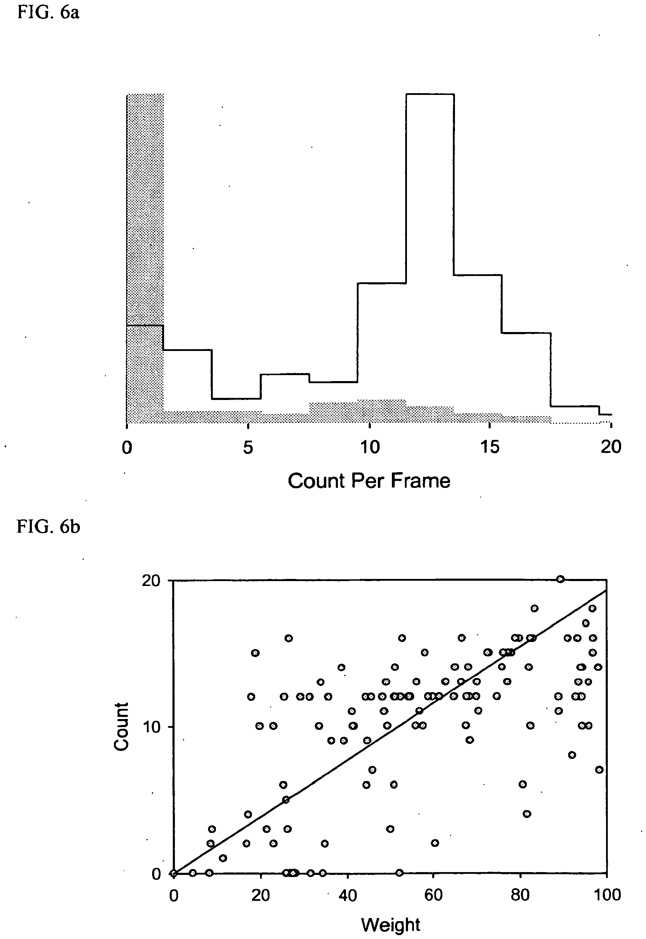

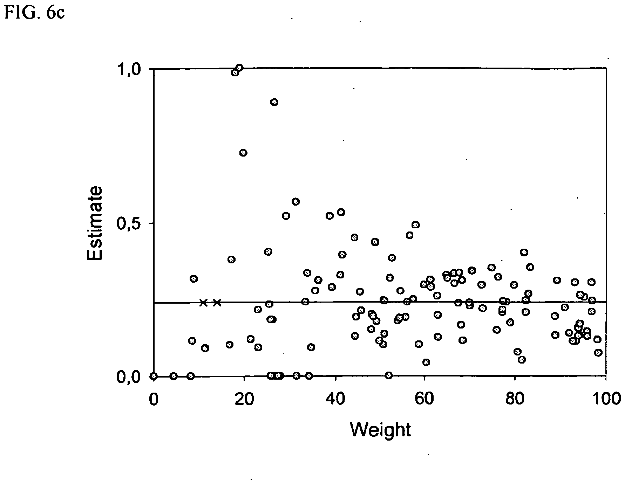

FIG. 6    shows the distribution of individual samples and the bivariate sampling distributions when estimating the total number granule cells in rat cerebellum; a) the distributions of the correct counts per disector, b) the correct count and weight for all fields sampled with the proportionator, c) estimates (the ordinate is fraction of maximal estimate), the horizontal line is the average estimate;

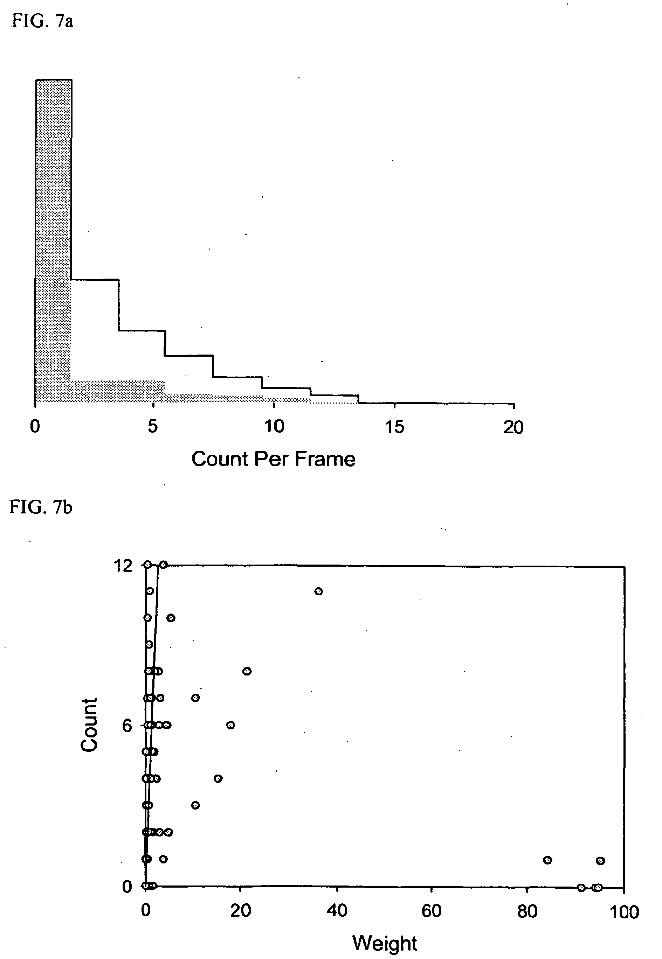

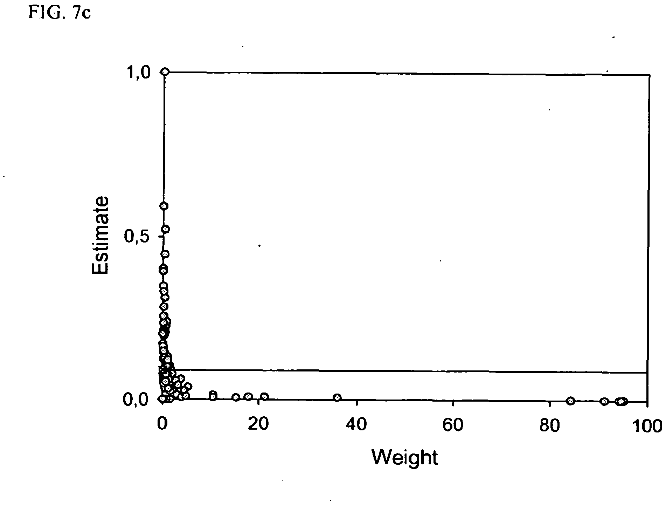

FIG. 7    shows the distribution of individual samples and the bivariate sampling distributions when estimating the total number of GFP orexin neurons in mice; a) the distributions of the correct counts per disector, b) the correct count and weight for all fields sampled with the proportionator, c) estimates (the ordinate is fraction of maximal estimate), the horizontal line is the average estimate;

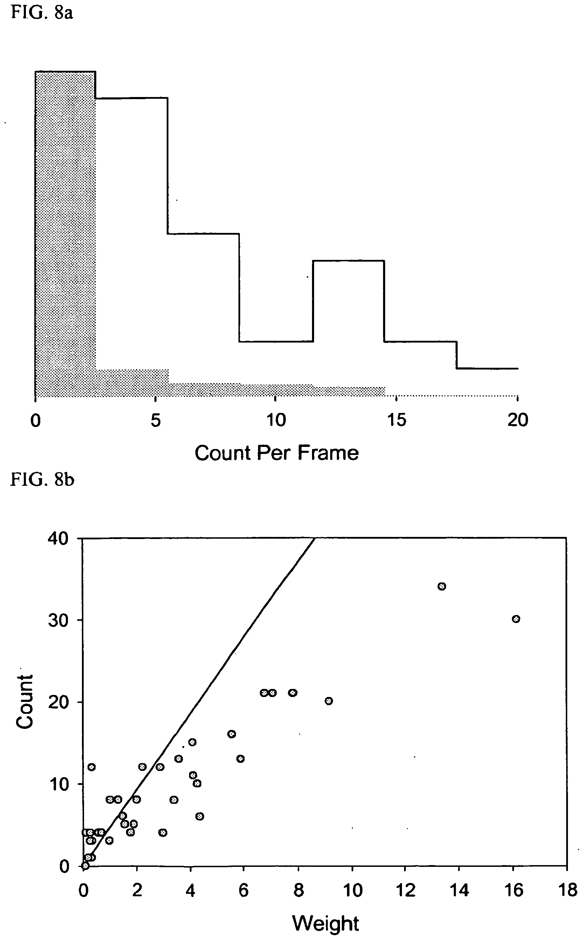

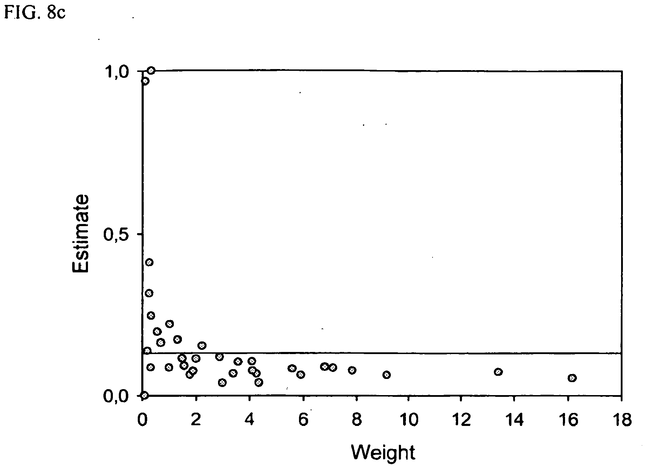

FIG. 8    shows the distribution of individual samples and the bivariate sampling distributions when estimating the area of $\beta$ cells in dog pancreas; a) the distributions of the correct counts per dissector, b) the correct count and weight for all fields sampled with the proportionator, c) estimates (the ordinate is fraction of maximal estimate), the horizontal line is the average estimate; and shows the distribution of individual samples; and showing distribution of individual samples;

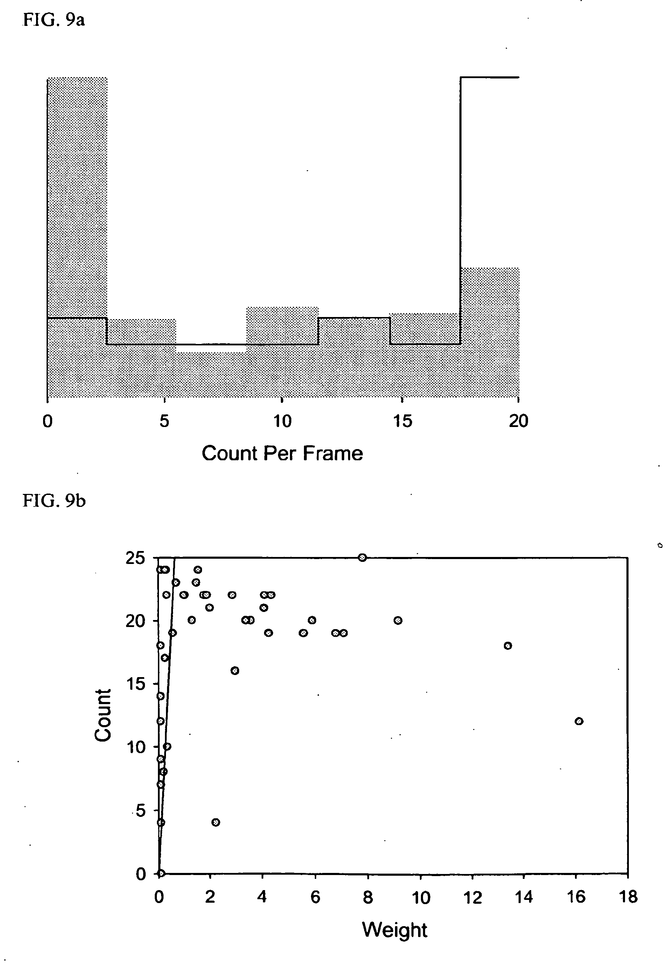

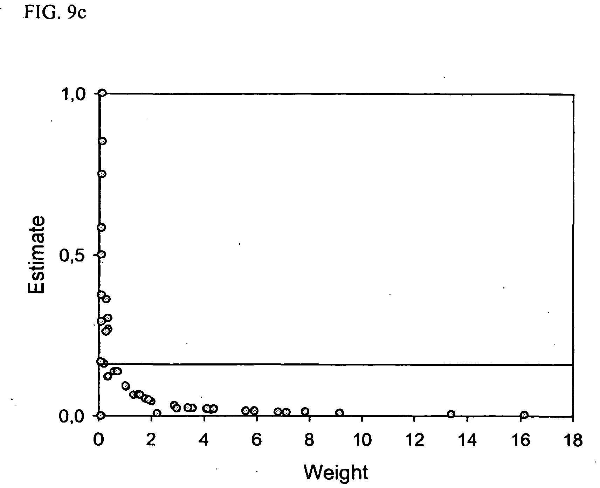

FIG. 9    shows the distribution of individual samples and the bivariate sampling distributions when estimating the containing tissue in dog pancreas; a) the distributions of the correct counts per dissector, b) the correct count and weight for all fields sampled with the proportionator, c) estimates (the ordinate is fraction of maximal estimate), the horizontal line is the average estimate.

DETAILED DESCRIPTION / PREFERRED EMBODIMENT

As mentioned above, quantification of tissue properties is improved using the general method according to the invention - in the following called the proportionator sampling and estimation procedure - including automatic image analysis and non-uniform sampling with probability proportional to size (PPS). The complete region of interest is partitioned into fields of view, and every field of view is given a weight (the size) proportional to the total amount of requested image analysis features in it. The fields of view sampled with known probabilities proportional to individual weight are the only ones seen by the observer who provides the correct count. Even though the image analysis and feature detection is clearly biased, the estimator is strictly unbiased. In the following, the proportionator is compared to the commonly applied sampling technique (systematic uniform random sampling, SURS, in 2D space or so-called meander sampling) using three biological examples: estimating total number of granule cells in rat cerebellum, total number of orexin positive neurons in transgenic mice brain, and estimating the absolute area and the areal fraction of β islet cells in dog pancreas. The proportionator was at least eight times more efficient (precision and time combined) than traditional computer controlled sampling.

The proportionator combination of biased image analysis and non-uniform sampling leading to unbiased estimation has been studied using simulation. The proportionator is based on automatic weight assignment to every field of view using image analysis, followed by systematic uniform random sampling (SURS) on the accumulated weights. An unconditionally unbiased estimate is ensured using very well-known general statistical techniques (Hansen & Hurwitz 1943; Horvitz & Thompson 1952). The so-called Horvitz-Thompson estimator provides an unbiased estimate when the actual counts in the sampled fields of view are 'correct' (the actual counts are done by an expert user or a precise measuring device and not by image analysis) and the exact sampling probability of every field of view is known.

The weight of each field of view is automatically assigned by image analysis. The image analysis assigns weight to a field of view according to the amount of a requested image analysis feature. For estimating the number of green GFP-expressing neurons, for example, the weight of each field of view may be its amount of green color observed under fluorescence illumination.

As shown in Fig. 1, the fields of view are first arranged according to the smooth fractionator based on their weights, and then the accumulated weight $Z$ is computed for this ordering. With a random start, a sample of the specified size $n$ is sampled systematically on the ordinate of accumulated weight, using a sampling period of $Z/n$. These fields of view with known co-ordinates are then presented to the user.

The expert user assigns the unbiased count $x_i$ for each sampled field of view with a weight $z_i$, using any relevant accurate measuring principle, including stereological probes (points, lines, frames, or disectors, optical or physical). The unbiased estimate $X$ of the total content in the image or section is then simply

$$X := \frac{Z}{n} \sum_{i}^{n} \frac{x_i}{z_i} \qquad (1)$$

The relation between the biased weight of a field of view and the correct count in the field may be positive or negative. Regardless of that, the estimate is always unbiased. The precision ($CE$=Coefficient of error) is, however, much dependent on the relationship between weight and count: the more positive the better the precision, if absent or negative the precision may be rather poor. Also, all kinds of noise in the relationship between weight and count reduce precision.

This study compares the actual performance of the proportionator to the traditional SURS (Gundersen *et al.* 1999) by applying it in three biological examples: estimating total number of granule cells in rat cerebellum, total number of orexin neurons in transgenic mice brain, and absolute and relative area of β islet cells in dog pancreas.

**Methods and Materials**

In the preceding paper (Gardi *et al.* 2006) smooth fractionator sampling was described, tested and compared to SURS using simulations. The simulation framework was built on top of the existing stereological software CAST (VisioPharm, Horsholm, Denmark). As mentioned in the appendix A in (Gardi *et al.* 2006) the weight assignment procedure was designed and implemented from the start as an external component to CAST as a dynamically loaded library (dll). Currently, this weight assignment gets an image and one requested color voxel as input, and gives back a weight as output.

The weight assignment used in this study is very basic but robust. The input image consists of voxels, and the requested color, pointed out by the user, is also a voxel. Each voxel has a color which is a mixture of red, green and blue. The voxels are observed in 3D color space with these three fundamental colors as axes (Fig. 2). The distance $D$ from every color voxel in the image to the requested color voxel is measured in this 3D color space. Since the fundamental color values are in the range of 0 to 255, the maximum possible distance in this cube of 3D space is $\sqrt{(255^2+255^2+255^2)}$ = 441.67. For each voxel, the proximity to the requested voxel as a percentage of the maximum distance is calculated:

$$Proximity = 100 \cdot \frac{441.67 - D}{441.67}$$

An additional feature in the weight assignment is that the user may indicate the minimal color proximity beyond which voxels will be disregarded. Voxels contributing to the weight thereby are enclosed in a sphere around the requested voxel, cf. Fig. 2. The weight assigned to each field of view is the sum of the proximity percentages from all voxels in the field.

The proportionator is compared to the traditional SURS using the above-mentioned three biological examples, using a microscope system modified for stereology (detailed setup is presented in appendix A below). In all examples, four independent estimates are obtained for each slide: two estimates using the proportionator and two using traditional SURS. The relative variance between the two estimates in each repetition of the same method is used to provide a (coarse) indication of how accurate the method is.

The number of fields of view observed, as well as the time spent on delineating the region and assigning weights is recorded. A pilot study is performed for each example to adjust the sampling fractions necessary for obtaining approximately the same total counts using the proportionator and traditional SURS. Those fractions remain constant throughout the whole example and the slides within it, regardless of the total number of fields of view in each slide. In each slide, the region of interest is delineated independently four times and color requests and weight assignments are performed independently for the two proportionator estimates. The ranges of weights differed between slides due to the difference in color, staining, and section artefacts.

### Example 1: Total number of granule cells in rat cerebellum

The estimation of total number of granule cells in rat cerebellum using the optical fractionator (West *et al.* 1991) with a varying sampling fraction (Dorph-Petersen *et al.* 2001; Horvitz & Thompson 1952) was done on a systematic, uniformly random sample of sections from two normal rats.

Images are shown in FIG. 3. The blue granule cell layer is clearly visible at 1.25X (upper left panel). The area of interest is delineated coarsely and partitioned into fields of view. The upper right panel shows the fields of view with their assigned weight on a grey-scale. Middle left panel shows the distribution of sampled fields (white rectangles) for the proportionator, the selected fields of view are almost surely in the granule cell layer. As shown in the middle right panel-sampling with the traditional SURS-such fields of view may or may not hit the blue region. The lower two panels are examples of counting at 100X magnification (oil lens).

Following immersion fixation in 4% phosphate-buffered formaldehyde, the cerebellum was isolated and divided into halves. One random half was embedded isotropically in 5% agar using the isector (Nyengaard & Gundersen 1992), embedded in glycol-methacrylate (Technovit 7100, Kulzer, Wehrheim, Germany), and cut exhaustively with a block advance of 40 $\mu$m. Every 24th section was taken by SURS and stained with a modified Giemsa stain (Larsen & Braendgaard 1995), providing six and eight sections, respectively. The final screen magnification was 2800X using a 100X objective. The color inclusion sphere was 20%. The areas of the 2D unbiased counting frame (Gundersen 1977) and the field of view were 418 $\mu$m$^2$ and 14000 $\mu$m$^2$, respectively. Step lengths in the x- and y-direction for the SURS were 1864 $\mu$m and 1332 $\mu$m (providing a field of view sampling fraction of $5.64 \cdot 10^{-3}$) resulting in a total disector areal sampling fraction of $1.68 \cdot 10^{-4}$. With a sampling fraction of $1.09 \cdot 10^{-3}$ for the proportionator, the disector areal sampling fraction was $0.32 \cdot 10^{-4}$ (19% of SURS). The $Q^-$-weighted section thickness was 35 $\mu$m and the height of the optical fractionator was 25 $\mu$m.

The estimator of the total number of cerebellar granule cells is

$$N(cells) := \frac{1}{SSF} \cdot \frac{1}{ASF} \cdot \frac{1}{HSF} \cdot 2 \cdot \sum Q^- \tag{2}$$

where the factor 2 is the inverse hemisphere sampling fraction, SSF is the section sampling fraction, ASF is the areal sampling fraction and HSF is height sampling fraction using the $Q^-$-weighted section thickness:

$$\bar{t}_{Q^-} := \frac{\sum (t_i \cdot Q_i^-)}{\sum Q_i^-} \tag{3}$$

Generally speaking, this is an example of a semi-clustered distribution where the very irregular granule cell layer constitutes roughly a ¼ to 1/3 of the organ, cf. Fig. 3.

**Example 2: Total number of GFP orexin neurons in mice brain**

Two brains were studied from mature transgenic mice, where orexin neurons in lateral hypothalamus and adjacent perifornical area could be visualized *in situ* by expression of enhanced green fluorescent protein (Burdakov *et al.* 2006).

Images are shown in FIG. 4. The upper row shows the same region of interest at 10X objective magnification in bright field and during color identification using fluorescence light. Note the greenish background noise. Counting is performed using a 60X oil objective using the optical disector, as shown in the panels below. The small inserts indicate the positions of the sampled fields.

Brains had been immersion fixed in 4% phosphate-buffered formaldehyde for a few hours, cryo-protected and frozen in liquid nitrogen. The brains were cut exhaustively using a cryomicrotome with a microtome advance of 80 μm and every second section was chosen by SURS. Eight and six sections were observed from the two brains. The total number of orexin neurons was estimated using fluorescence light and the optical fractionator. The final screen magnification was 1680X using a 60X objective. The color inclusion sphere was 5%. The area of the 2D unbiased counting frame was 18100 μm and the field of view area was 43200 μm². Step lengths in the x- and y-direction for SURS were 298 μm and 223 μm (field of view sampling fraction of 0.65) resulting in total area sampling fraction of 0.272. With a fields sampling fraction of 0.28 for the proportionator, the result was a total area sampling fraction of 0.117 (43% of SURS). The $Q^-$-weighted section thickness was 45 μm and the height of the optical fractionator was 35 μm. Total number was estimated as in the previous example. The orexin neurons have a mildly clustered distribution in the reference space. The example was selected in order to test the performance of the proportionator in a situation with a stain with a high and very varying unspecific 'staining' of the background, cf. Fig. 4.

**Example 3: Area of β cells in dog pancreas**

Two arbitrarily sampled paraffin blocks from a dog pancreas were used for studying the estimation of absolute and relative area of insulin producing β cells. The pancreas had been perfusion fixed with 1% paraformaldehyde and 1% glutaraldehyde, it was cut into 3 mm thick complete cross sections and embedded in paraffin (Kroustrup & Gundersen 1983). A 3-μm-thick section was cut from each block and mounted on a Superfrost+ glass slide. Using an automatic stainer (Benchmark XT, Ventana, Illkirch Cedex, France), the β cells were stained with an insulin antibody (1:50 guinea pig anti-swine insulin, code A0564, DAKO, Glostrup, Denmark) and XT UltraView DAB. All cell nuclei were stained with Haematoxylin, cf. Fig. 5.

Upper panel to the left in FIG. 5, the area is delineated using a 1.25X objective. Note the sparse but quite uniformly distributed islands of β cells. Upper panel to the right, the brown β cell color is identified at 4X objective magnification and weights are assigned. Images from the sampled fields of view with a 60X objective and the point grid probes are shown at the panels below.

The final screen magnification was 1680X using a 60X objective. The color inclusion sphere was 15%. The total area of a field of view was 36300 μm². Step lengths in the x- and y-direction for SURS were 1580 μm and 1180 μm (field of view sampling fraction of 0.0196). The proportionator had an areal sampling fraction of 0.00383 (20% of SURS). The area per point (a/p) for the β cells was 386 μm and for the containing tissue 1540 μm; both counts were performed in the same fields, which, for the proportionator, were selected based on the amount of insulin-stain. The estimator equation for the total area of β cell in each section is:

$$A(\beta \text{ cell}) := \text{Total}[P(\beta \text{ cell})] \cdot (a/p) \qquad (4)$$

where Total[P(β cell)] is estimated using Eq. 1.

These estimates are all what is needed if (a sufficiently large sample of) parallel sections are sampled uniformly with a constant separation, *T.* The total volume of β cells in the pancreas is then obtained by the Cavalieri-estimator:

$$V(\beta \text{ cell}) := T \cdot \Sigma A(\beta \text{ cell}) \qquad (5)$$

In the (unlikely) situation that the sections are uniformly sampled with unknown or varying distances, one would have to use the classical volume fraction estimator

$$V_V(\beta \text{ cell/tissue}) := \text{Total}[P(\beta \text{ cell})]/\text{Total}[P(\text{tissue})] \qquad (6)$$

which requires the additional counting of points hitting the reference space <u>and</u> an independent estimate of the total pancreatic volume, V(tissue), to obtain the total volume of β cells in the pancreas:

$$V(\beta \text{ cell}) := V_V(\beta \text{ cell/tissue}) \cdot V(\text{tissue}) \qquad (7)$$

Both estimators require determination of various dimensional aspects of shrinkage for the total volume of β cells to be unbiased. The pancreatic β cells are an example of a roughly homogeneous distribution of small and sparse events, their volume fraction is only ~0.027.

**Results for the above three examples**

The first example studied was the estimation of total number of granule cells in rat cerebellum. The distinct blue stain of the granule cell layer was clearly visible with bright field 1.25X objective and made the color identification and weight assignment fast and reliable (Fig. 3). The small area sampling fraction of the counting frame (3%) with a 100X objective made the identification of an empty field a fast process. Fig. 6 shows the count distribution, as well as the relation between weights, counts and estimates.

FIG. 6a shows the distributions of the correct counts per disector. The gray histogram is the cell counts in traditional SURS samples, while the full drawn histogram is for the proportionator (the distributions are normalized to the same mode). FIG. 6b shows the correct count and weight for all fields sampled with the proportionator. The contribution from each field to the total estimate is proportional to the slope of a line from origin to the data-point. The estimates are shown in FIG. 6c (the ordinate is fraction of maximal estimate), the horizontal line is the average estimate. The slope corresponding to that average estimate is the slope of the line shown in FIG. 6b. The **CE** of the proportionator is the **CE** of the slopes around this slope. For the proportionator, the variability of the counts themselves is therefore irrelevant (it is insensitive to field-to-field variation).

As illustrated in Fig. 6a, the proportionator samples fields with a much higher average count than traditional SURS (9.8 vs. 2.2), and one therefore needs only to study about ¼ of the number of fields necessary for SURS. Moreover, the **CV** of the proportionator estimates from each field (Fig. 6c) is much lower than that among SURS fields (the grey distribution in Fig. 6c): 0.24 vs. 0.63. Despite the lower number of fields studied, the statistical efficiency of the proportionator (roughly $\mathbf{1/CE^2}$) is therefore much greater than that of traditional SURS: ~17 vs. 2.5, cf. also Table 1, which shows the summary of results with regards to estimates and precision.

It is possible to estimate directly the **CE** of the proportionator estimate for each section by taking two independent samples of size **n/2** instead of one sample of size **n**. In ordinary practice, it is more useful to think of a direct estimation of the variance **Vari(X)** of the estimate of the total amount of structure **Xi** in the i'th section. For the estimate of total amount in all **m** sections, Σ**X**, one may then compute the overall direct **CE**:

$$CE_m(\sum X) = \sqrt{\dfrac{\sum_m Var(X)}{\sum_m X^2}} \qquad (8)$$

The same strategy does not work for traditional SURS because SURS sampled FOVs are dependent.

Table 1. **Summary of estimates and precision for the three biological examples.** Values are means per animal (or per slide for pancreas). Values in brackets are proportionator percentage of SURS. 'Estimate **CE**' are the **CVs** of the replications. Proportionator with direct **CE** was run by splitting the proportionator sample into two independent samples, cf. text.

| SURS | Estimate | Estimate CE | Direct CE | Total Count | Observed FOVs |
|---|---|---|---|---|---|
| Pancreas, tissue | 53.4 mm$^2$ | 0.073 | | 686 | 54 |
| Pancreas cells | 1.48 mm$^2$ | 0.078 | | 76 | 54 |

(continued)

| SURS | Estimate | Estimate CE | Direct CE | Total Count | Observed FOVs |
|---|---|---|---|---|---|
| GFP orexin neurons | 1100 | 0.57 | | 97 | 114 |
| Granule cells | $2.01 \cdot 10^8$ | 0.63 | | 255 | 115 |
| Proportionator | | | | | |
| Pancreas, tissue | 51.2 mm$^2$ | 0.038 (52%) | 0.081 (111%) | 188 (27%) | 11 (20%) |
| Pancreas, β cells | 1.52 mm$^2$ | 0.023 (30%) | 0.066 (84%) | 88 (116%) | 11 (20%) |
| GFP orexin neurons | 1152 | 0.14 (25%) | 0.14 (24%) | 98 (101%) | 43 (38%) |
| Granule cells | $1.62 \cdot 10^8$ | 0.18 (29%) | 0.14 (22%) | 303 (109%) | 31 (27%) |

The statistical precision of the estimate may be determined by performing the estimation in two statistically independent samples of half-size using equations 8 and 9.

The poor precision of the traditional SURS estimator of total number of both granule cells and GFP orexin neurons is indicative of the section inhomogeneity or field-to-field variation. Note, however, that there is only a total of two replications to provide the estimated **CEs** and also the direct **CE** estimates are the result of two comparisons of two independent samples-and of half-size. Consequently, all **CE** estimates in Table I are rather imprecise. In ordinary practice, one would average the direct **CE** estimates over all **m** animals in each group,

$$\overline{CE} := \sqrt{\frac{\sum_m CE^2}{m}} \qquad (9)$$

and thereby obtain much more useful estimates.

It is necessary to emphasize that the sampling design for each of the three examples is made to ensure that the results of traditional SURS and proportionator sampling and estimation are as *comparable* as possible. Since the counting noise is roughly proportional to $\Sigma \boldsymbol{Q}^-$, the number of fields studied are adjusted (in the pilot study) to provide roughly the same total count. The frame size and the disector height are the same for both sampling strategies. It follows that *none of the sampling designs are optimized* for the corresponding strategy.

As an example, the statistical efficiency of SURS might be improved by sampling about three times more fields. The counting frame could then be reduced to two maximally separated frames per field with a combined area of 1/6 of the present frame. The six-fold higher number of frames examined would considerably reduce the impact of tissue inhomogeneity on SURS precision (the various ways of optimizing the proportionator are discussed below).

The example of optimizing a strategy at the expense of studying more fields underlines the importance of taking the time spent per animal into account when trying to make realistic comparison of sampling strategies. If **T** is the time spent per animal, the relative efficiency (time and precision) of the proportionator compared to traditional SURS is

$$Relative\ Proportionator\ Efficiency = \frac{CE_{SURS}^2 \times T_{SURS}}{CE_{Proportionator}^2 \times T_{Proportionator}} \qquad (10)$$

Table 2 shows the total time spent on each of the examples. Since the poor SURS estimator already took twice as much time as the proportionator, traditional SURS is clearly never going to be as efficient as the proportionator for cerebellar granule cell counting.

Table 2. **Average time spent for counting one animal** (or one slide in the pancreas example). Values in brackets are for the proportionator in percentage of SURS. The least column is computed using Eq. 10, below. The $CE^2$ used is a weighted average of **EstCE$^2$** and **DirCE$^2$: CE$^2$ := (2\*EstCE$^2$ + DirCE$^2$)/3,** taking into account the lower number of observations for the Direct **CE** estimates.

| SURS | Total Counting Time (min) | No Of Slides | Overhead Time Per Slide (min) | Total Time (min), T | Relative Effiency of Proportionator Compared to SURS |
|---|---|---|---|---|---|
| Pancreas, Tissue | 19:41 | 1 | 1:00 | 20:41 | |
| Pancreas, β cells | 19:41 | 1 | 1:00 | 20:41 | |
| GFP orexin neurons | 16:45 | 7 | 1:00 | 23:45 | |
| Cerebellar Granule cells | 41:37 | 7 | 1:00 | 48:38 | |
| **Proportionator** | | | | | |
| Pancreas, Tissue | 4:19 | 1 | 5:00 | 9:19 (45%) | 8x |
| Pancreas, β cells | 4:19 | 1 | 5:00 | 9:19 (45%) | 25x |
| GFP orexin neurons | 8:44 | 7 | 5:00 | 43:44 (184%) | 9x |
| Cerebellar Granule cells | 10:06 | 7 | 2:00 | 24:06 (50%) | 24x |

The above comparison of proportionator and traditional SURS cannot be used in ordinary practice, as it requires that the image is sampled separately with SURS. It is, however, possible to compute the efficiency of proportionator relative to simple random sampling without any extra effort.

Defining

- $N$ = total number of fields of view (always known)
- $n$ = proportionator sample size (number of sampled fields of view that will be observed by the user)
- $p_i$ = the known probability of proportionator sampling of the i'th field of view
- $x_i$ = the correct count provided by the user in the i'th field of view
- $CE_{Prop}$ estimated using direct CE

the method implies

- estimation of the preponderance of $x_i$ in the population

$$f_i := \frac{1}{p_i}$$

- estimation of population central moments:

$$\overline{x} := \frac{\sum_{i}^{n} f_i \cdot x_i}{N} \quad \text{and} \quad \overline{x^2} := \frac{\sum_{i}^{n} f_i \cdot x_i^2}{N} \tag{10}$$

- estimation of population *Var(x):*

$$Var(x) := \frac{n}{n-1} \cdot (\overline{x^2} - \overline{x}^2) \tag{11}$$

- estimation of population $CV^2(x)$ :

$$CV^2(x) := \frac{Var(x)}{\overline{x}^2} \tag{12}$$

- and, finally, estimation of the efficiency of proportionator relative to that of simple random sampling

$$Prop.\ Rel.\ Eff. := \frac{CV^2(x)}{n \cdot CE_{Prop}^2} \tag{13}$$

For stability, the above is computed for several sections per individual as in Eq. 8, and, for several individuals, as in Eq. 9.

In FIG. 7a, the example is clearly characterized both by fields with spuriously very large weights (with very low counts) and large counts in fields of low weight.

The second example was the estimation of the total number of orexin neurons in transgenic mice brain. Weight assignment for the GFP-expressing orexin neurons was only possible with a 10X objective under fluorescence light (Fig. 4). The noisy and greenish image contributed to non-trivial color identification and weight assignment. The requested color had to be fine tuned, and the maximum distance in 3D space (Fig. 2) had to be carefully adjusted to avoid picking up the background noise. The region of interest was small, and the number of total fields of view was not more than 40 per slide. The large sample size for both the proportionator and traditional SURS (28% and 65% - respectively) made the color identification and weight assignment (for each slide) the most time-consuming operation in the proportionator (Table 2) and made the proportionator non-beneficial with regards to time as compared to the traditional SURS, cf. Table 2. The individual samples and weights are shown in figure 7.

The pronounced inhomogeneity did, however, make traditional SURS both very inefficient and quite time consuming, so in the comparison in this really difficult example the proportionator came out about eight times more efficient, solely because of a much better statistical efficiency. The genuine efficiency of the combination of sampling proportional to weight and then estimating *inversely* proportional to it is highlighted in this example. Even if it takes twice the time to accomplish this, it is much more efficient thereby to avoid the inhomogeneity w. r. t. numerical density than the brute force counting of really many fields.

The third and last example is the estimation of the area of β cells in dog pancreas using point counting. The β cells were clearly visible as dark brown color with a 1.25X objective. Due to camera artifacts at the tissue edges, which were also visible as a shade of brown, the region was delineated with a 1.25X objective, but the color identification and weight assignment was done with a 4X objective (Fig. 5). The number of fields of view was approximately 3000 (calculated to fill up the entire view at 60X), which led to a precise but time-consuming weight assignment operation at 4X. Identifying the color was fast, but the actual stage movement for observing the total number of fields of view led to approximately 3 minutes of stage movement (Table 2).

FIG. 8a clearly indicates a special problem in sampling small and sparse events with the proportionator: non-zero counts may occur in fields of low weight and they provide very high estimates (upper two data points to the right), decreasing the precision. The sampling of total tissue (FIG. 9) is performed using the weights of the insulin-stain and the count-weight relation is therefore very poor.

Fig. 8 shows the statistical characteristics of the counts, weights and estimates. The β cells arc a typical case of proportionator performance in detecting relatively sparse events: it avoids very well the fields with low counts and focus on fields of a high count. The occasional positive count in a field of very low weight, providing extreme estimates and reducing precision, were too rare to really offset the efficiency which was roughly 25 times better than that of traditional SURS, about equally due to better precision and faster performance.

The estimation of total tissue area in FIG. 9 based on sampling of the β cell stain was a long shot (and it is unnecessary for estimating total β cell volume, as outlined above). Because of the rather homogeneous distribution of islets in the sections, a large total amount of β cell stain, i.e. a large weight, provides proportionator sampled fields with large tissue areas as indicated in FIG. 9a. The count-weight association is very weak, however, and the estimate is not very precise. The procedure is fast, however, and the combined efficiency is clearly better that of traditional SURS.

**Discussion**

This is the first study of the performance of the proportionator in real examples, and an obviously preliminary one. The main purpose was to get some experience with implementing the novel sampling mechanism; the imprecise estimates of efficiency were only of secondary importance (hence the low number of animals studied). The efficiency estimates did, however, provide encouragement for the continued work with this radically different sampling and estimation paradigm for quantitative microscopy.

With respect to the estimated efficiencies all examples indicate that the proportionator is much more efficient than traditional SURS. However, the estimates of efficiency are not very precise and the examples are all inhomogeneous at various scales, so the above conclusion may not be valid in many cases of general interest. The combined efficiency nevertheless turned out, somewhat surprisingly, to be very robust against poor count-weight associations as witnessed by the GFP and pancreatic tissue examples.

The proportionator is unique among the efficient sampling strategies in that it allows the real precision, the direct **CE** in Table 1, to be estimated unbiasedly-and at no extra cost to or effort of the user. There arc several reasons why this is a very large advantage:

- The estimator imprecision due to field-to-field variation (the tissue inhomogeneity) is not predictable using the current statistical predictors (Kieu *et al.* 1999) of the *CE* (because fields are sampled systematically, and predicting the precision of that in 2D sections is mathematically difficult). In inhomogeneous tissue the real **CE** may be several-fold larger than the (incompletely) predicted one.
- For number estimation in very homogeneous tissue, the **CE** of the proportionator is *lower* than the counting noise, which is generally $CE_{noise} = 1/\sqrt{count}$, implying that one has to count 100 cells for this part of the **CE** to be ~0.1. To take advantage of the higher precision of the proportionator, the dedicated researcher would like to know precisely what the precision *is* in her sections before counting 70 cells in 16 fields instead of 100 cells in 24 SURS fields (both with a **CE** of 0.1 in large sections of homogeneous tissue).
- The proportionator, correctly performed, is guaranteed to be unbiased, irrespective of the count-weight relation. This relation may, however, be unexpectedly weak or even negative (or something may go wrong with the automatic weight assignment) and it is a comfortable safeguard that this will then be reflected in an (unexpectedly) high **CE**, which is shown on the monitor right after counting in the last field.
- The relative efficiency of proportionator compared to traditional SURS cannot be performed in ordinary studies (it requires duplicate estimate of SURS). However, the proportionator sample alone is sufficient for estimating its efficiency relative to simple random sampling, cf. Eqs. 10 to 13. This has the great advantage that the procedure can then report its own failure (due to user-misunderstanding, faulty weight assignment, or any other reason including the occurrence of sectors with very high count/weight ratio) by an efficiency relative to simple random sampling of about 1 or lower.

The many practical problems encountered in the wide range of examples selected for this study allow us to identify a number of features that may improve the efficiency of proportionator sampling and estimation. A number of these were anticipated, but we wanted to keep the technical set-up and the software as simple as possible at this stage, considering that the starting point was the software developed for the primitive simulation study.

It is characteristic of the proportionator that it is insensitive to ordinary field-to-field variation; the section inhomogeneity with respect to the feature under study becomes a signal rather than a noise. On the other hand, any noise in the count-weight relation, shown in Figs. 6 to 8, decreases precision. The specific characteristic of the tissue and the stain, including antibodies, give rise to many kinds of 'noise'. However, many of the sources of noise are of a technical character and are potentially preventable or may be overcome.

**The microscope and the optics** are much more intimately integrated in the proportionator procedure than in ordinary microscopy. For optimal performance a number of features are important:

- At low magnification, the illumination of the section is very uneven, cf. Fig. 3. This is relatively easily removed by incorporating simple image analysis algorithms (Bischof *et al.* 2004; Osadchy & Keren 2004) in the procedure.
- Various diffraction phenomena may occur at the edges of the section at very low magnification. To minimize such problems it is necessary to have a range of low magnification objectives to choose from. Depending on the manufacturer of the microscope, 1X, 1.25X, 1.6X, 2X, 4X, 6X, 10X, and 15X are often available.

- Almost all inhomogeneous organs also show section-to-section variation. The obvious way of turning also this noise into a signal is to make the weight assignment and sampling on the whole set of sections in one run. That requires that the microscope is equipped with a multi-slide stage, usually these accommodate 8 sections, which in most cases would be enough for one animal (if not, one should analyse every second section in one series and the others in another one, that essentially eliminates their variability (Gundersen, 2002)). When applicable, this stratagem alone may increase the efficiency of the proportionator manifold. For optimal efficiency it is necessary that the staining intensity and the section thickness are roughly constant among sections.
- If the total tissue area becomes large at the scale of the final magnification, one may use SURS subsampling of FOVs before weight assignment and proportionator sampling. Once the number of FOVs becomes larger than a few thousand, efficiency is unlikely to improve if many more FOVs are sampled, the obvious exception being the analysis of rare events.

**The low magnification scanning of all FOVs** is also critical for proportionator efficiency and may be optimized in several ways:

- The initial indication of the position of the section on the slide may be performed by the fast dragging of a rectangle.
- In many cases, the area of interest is the whole section and no further delineation is necessary since all empty FOVs between the section and the above, outer rectangle will not produce the requested specific signal (obtaining a weight of 0) and they are therefore automatically eliminated in the sampling proportional to weight.
- Automatic detection of the section boundary (Sahoo *et al.* 1988; Skarbek W. & Koschan A. 1994; Wang *et al.* 2006) may in some cases be an alternative to the above.
- Some modem stereological software systems like NewCast® (VisioPharm Horsholm, Denmark) already make a fast scan at low magnification and present the composite image of the whole section on the monitor. When the area of interest is just a (small) part of the section, the necessary manual delineation by the expert user may now often be performed on this so-called 'SuperLens' image, generally much faster than the interactive delineation used by most software. If the initial scan was performed at a sufficient resolution, the information for the weight assignment is already available, which will further reduce the time spent on setting up each section.

**The partitioning of the section** into FOVs should also be considered. The 'catchment area' for collecting the weight information may in many cases be different from the precise FOV at high magnification. It should be as large as the stereological test system and often also include a guard area around it, both defined by the user in the pilot study. Additionally, it may be necessary to increase this area to allow for imprecision in the translation of section co-ordinates between very different magnifications (sensitive to the so-called parcentering of the lenses in question). As illustrated in Fig. 3, this feature would have improved the estimator considerably in the analysis of the rat cerebellum. The frame area was only 3% of the FOV and most of the data points below the line in Fig. 6, middle, owe their relatively low count to the fact that the weight for the total FOV poorly matched the count in a very small area of the FOV.

**The indication of the requested colour** may easily be optimized in several ways, since we just used primitive pointing at a characteristic pixel:

- The range of colours actually represented in the section by the many instances of the structure under study should be taken into account.
- The box enclosing these colours in colour space may automatically be enlarged by a preset amount to make the weight assignment sufficiently sensitive and still specific.
- The colours indicated in the first section may often be used on all following ones, particularly if the above box is large enough.
- The weight assignment is faster if all image pixels that happen to be inside the box are given a weight of 1, all others are disregarded (implicitly given a weight of 0). The weight of the FOV is then simply the sum of weights of all pixels in it.
- The fine tuning of the colour selection should be interactive using a stored image with indication of all pixels of weight 1.
- The pancreas tissue example is particular in that is does not have a single characteristic colour. Inspection of the high magnification images in Fig. 5 clearly indicates that pancreas tissue, due to counter staining, possesses a large range of colours-including shades of brown similar to the insulin antibody stain. In such cases the requested 'colour' should be pointed out by dragging rectangles over the tissue, proving a rather large box enclosing all requested colours. The stain specific for a particular phase, the insulin stain in the example, is then indicated separately (it is likely already stored in a file which is simply reused). The weight assignment for the pancreas tissue may now be a fast Boolean procedure: A weight of 1 is assigned to all pixels with a colour in the large box, unless they are in the 'insulin-box' and therefore disregarded.

- The assignment of weight based on pixel colours may most likely be more sensitive and specific if colours are represented in a space of hue, saturation, and intensity (Pydipati *et al.* 2006) instead of the primitive red-green-blue representation used here.

**The use of other automatically detected features** than colour is a very promising area of research. The proportionator principle has just three requirements:

- the weight assignment must be <u>automatic,</u>
- it must produce a <u>number</u> in the range 0 to a suitable maximum for each FOV,
- and the weight should have a <u>positive relation</u> to the correct signal to be provided in sampled FOVs.

We have just used colour of individual pixels because it is very simple to implement (and fits into the general strategy that stains are used to positively enhance the structure under study). However, even now there is an enormous amount of features of an image that may be extracted automatically and quantified (Gonzalez & Woods 2002) - and they may all be used for proportionator sampling and estimation. As an example, if the distinct *edges* of the granular cell layer in the cerebellum are detected and given a weight according to their amount in each FOV, the sampling of Purkinje cells would be greatly facilitated. However, if all FOVs are at the edges of the granular cell layer, every second will still not contain Purkinje cells. Purkinje cells are only at the edge, which in the direction of the blue-not blue gradient is neighbouring the cerebellar surface, the natural section edge -and that neighbour-relation is evidently also an automatically detectable feature.

It is emphasized that the correct signal from sampled fields is in no way restricted to just a stereological count, it may be *any correct signal* from the FOV, including calibrated photometry or structure mass provided by acoustic microscopy, just to mention a few examples from microscopy.

**Editing the weights** is in practice often an advantage. The map of weights as shown in Fig. 3, top, right, makes it rather easy to detect problems. Editing may take many forms:

- The user may simply indicate that certain fields must be ignored because of technical problems like folds or localized staining artefacts, for example (this is not, however, compatible with an unbiased estimate).
- The weights are just numbers, and almost surely biased ones w. r. t. the structure under study. All kinds of transformations that preserve the positive relation to the count (and do not exclude any field with structure) are allowed.

➢ One may add a constant to all weights to avoid that FOVs with a very small weights provide a positive count. If this happens too often it is likely to decrease precision markedly because these estimates are very high (the contribution to the total from each field is proportional to the count *divided* by the weight).

➢ If the count-weight relation, illustrated in Figs. 6 to 8, is best represented by a monotonous curve and not a straight line one may transform all weights to √weight or use any other similar mathematical transform that rectifies the relation.

➢ If just colour is used for weight assignment, as in this paper, the count-weight relation for Purkinje cells, at the *edge* of the blue, detected granular cell layer, may be biphasic: after a maximum at a moderate weight, **Wm,** it decreases towards higher weights. This might be remedied by penalizing all weights larger than **Wm** by assigning final weights as **Weight' := weight - Wm.**

- Unspecific staining of the physical edges of the section is sometimes encountered even with highly specific antibodies. Automatic detection of section edges, discussed above, may be followed by reducing the weight of all pixels in a rim near the edge to some small weight (it must be larger than 0 to preserve unbiasedness, the rim could of course also contain the specific structure under study).

To summarise all of the above, this is the first report of the real performance of the proportionator, but we do not anticipate it to be the last. Biological research has for decades profited enormously from the availability of very specific markers for proteins or peptides or gene sequences or products of specific expressions etc. (as it has from less specific chemical stains for a century). With the proportionator we strongly believe that this quantization will be much more efficient and thereby in itself promote the widespread use of reliable stereological procedures.

### Appendix A - Hardware Setup

The system used was an Olympus BX50F-3 microscope (Japan), with a motorized stage manufactured by Prior Scientific Instruments model H101BX and Joystick Prior model H152EF both connected to Prior controller box H128V3 (Cambridge, England) which connects via a serial port to a computer. A Heidenhaim microcator model ND 281 (Traunreut, Germany) was connected via a serial port as well. An Olympus 100W high-pressure mercury burner USIHIO BH2-RFL-T3 with lamp USH-102D model U-ULS100HG was transmitting the fluorescence light. The fluorescence filter used (if applicable) was "pe U-N51006 F/TR C59531". When normal bright field light was needed, the Olympus halogen lamp JC12V 100W HAL-L U-LH100 was applied. An Olympus DP70 digital camera with a 1.45 million pixel CCD coupled with pixelshifting technology resulting in images with a resolution of 4080 x 3072 pixels was connected to the computer via a dedicated PCI bus card. The following Olympus lenses were used: UPlanApo 1.25x/NA 0.04, UPlanFI 4x/NA 0.13, UPlanApo 10x/NA 0.40, UPlanFL 40x/NA 0.75, UPlanApo 60x/NA 1.4 oil, UPlanApo 100x/NA 1.35 oil. The computer used was a mixed brand, Intel based, running a specially upgraded Computer Aided Stereology Tool (CAST software - Visiopharm, Hørsholm, Denmark) based on a code branch that was made on 10/November/2003 from the original Olympus CAST code version 2.3.0.2.

References

Bischof, H., Wildenauer, H. & Leonardis, A. (2004) Illumination insensitive recognition using eigenspaces. Computer Vision and Image Understanding, 95, 86-104. Burdakov, D., Jensen, L. T., Alexopoulos, H., Williams, R. H., Fearon, I. M., O'Kelly, I., Gerasimenko, O., Fugger, L. & Verkhratsky, A. (2006) Tandem-Pore K+ Channels Mediate Inhibition of Orexin Neurons by Glucose. Neuron, 50, 711-722.

Dorph-Petersen, K.-A., Lundersen, H.J.G & Jensen, E.B.V. (2000) Non-uniform systematic sampling in stereology. J. Microsc., 200, 148-157.

Dorph-Petersen, K. A., Nyengaard, J. R. & Gundersen, H. J. (2001) Tissue shrinkage and unbiased stereological estimation of particle number and size. J.Microsc., 204, 232-246.

Gardi, J.. E., Nyengaard, J. R. & Gundersen, H. J. G. (2006) Using biased image analysis for improving unbiased stereological number estimation - a pilot simulation study of the smooth fractionator. J.Microsc., 222, 242-250.

Gonzalez, R. C. & Woods, R. E. (2002) Digital image processing. Prentice-Hall, Prentice-Hall.

Gundersen, H. J. (1977) Notes on the estimation of the numerical density of arbitrary particles: the edge effect. J.Microsc., 111, 219-233.

Gundersen, H. J. (2002) The smooth fractionator. J.Microsc., 207, 191-210. Gundersen, H. J. & Jensen, E. B. (1987) The efficiency of systematic sampling in stereology and its prediction. J.Microsc., 147, 229-263.

Gundersen, H. J., Jensen, E. B., Kieu, K. & Nielsen, J. (1999) The efficiency of systematic sampling in stereology-- reconsidered. J.Microsc., 193, 199-211.

Hansen, M. M. & Hurwitz, W. N. (1943) On the theory of sampling from finite populations. Anneals of Mathematical Statistics, 14, 333-362.

Horvitz, D. G. & Thompson, D. J. (1952) A Generalization of Sampling Without Replacement from A Finite Universe. Journal of the American Statistical Association, 47, 663-685.

Jonasson, L., Hagmann, P., Pollo, C., Bresson, X., Richero Wilson, C., Meuli, R. & Kieu, K., Souchet, S. & Istas, J. (1999) Precision of systematic sampling and transitive methods. Journal of Statistical Planning and Inference, 77, 263-279.

Kroustrup, J. P. & Gundersen, H. J. (1983) Sampling problems in an heterogeneous organ: quantitation of relative and total volume of pancreatic islets by light microscopy. J.Microsc., 132, 43-55.

Larsen, J. O. & Braendgaard, H. (1995) Structural preservation of cerebellar granule cells following neurointoxication with methyl mercury: a stereological study of the rat cerebellum. Acta Neuropathol.(Berl), 90, 251-256.

Nyengaard, J. R. & Gundersen, H. J. G. (1992) The isector: a simple and direct method for generating isotropic, uniform random sections from small specimens. J.Microsc., 165, 427-431.

Osadchy, M. & Keren, D. (2004) Efficient detection under varying illumination conditions and image plane rotations. Computer Vision and Image Understanding, 93, 245-259.

Pydipati, R., Burks, T. F. & Lee, W. S. (2006) Identification of citrus disease using color texture features and discriminant analysis. Computers and Electronics in Agriculture, 52, 49-59.

Sahoo, P. K., Soltani, S. & Wong, A. K. C. (1988) A survey of thresholding techniques. Computer Vision, Graphics, and Image Processing, 41, 233-260.

Skarbek W. & Koschan A. (1994) Colour image segmentation - A survey. Technisher Bericht, Technical University of Berlin, 32-94.

Wang, Y. G., Yang, J. & Chang, Y. C. (2006) Color-texture image segmentation by integrating directional operators into JSEG method. Pattern Recognition Letters, 27, 1983-1990.

West, M. J., Slomianka, L. & Gundersen, H. J. (1991) Unbiased stereological estimation of the total number of neurons in thesubdivisions of the rat hippocampus using the optical fractionator. Anat.Rec., 231, 482-497.

**Claims**

1. Method for unbiased estimation of numbers, amounts, volume, length, perimeters and/or surface areas of object(s) in an image, the method comprising the steps of

    - providing an image with discernible image analysis features indicating the objects,
    - by image analysis partitioning the image into a plurality of sectors and selecting a subset of the plurality of sectors by sampling, wherein the number of the selected sectors is less than the number of the plurality of sectors,
    - determining the discernible image analysis features indicating objects for each of the selected sectors, and
    - calculating an unbiased estimation for objects in the image based on the result from the determining of the discernible image analysis features objects in the selected sectors,
    - the sampling of the subset of sectors is performed in accordance with a random sampling criterion
    **characterised in that**
    - the sampling is performed in accordance with a random sampling criterion using a non-uniform probability which is positively related to the likelihood of object-presence in a sector.

2. Method according to claim 1, wherein the method comprises

    - defining criteria for specific types of image analysis features, the image analysis features being indicative of the objects,
    - by computerised image analysis, automatically analysing the sectors with respect to the defined criteria and assigning a numerical weight factor $z_i$ to each analysed sector, the weight factor being positively related, for example proportional, to image analysis features, for example total number or total amount, of detectable features,
    - sampling a number of sectors according to a random sampling criterion, wherein the probability for sampling of a specific sector is proportional to the weight factor $z_i$ for the specific sector.

3. Method according to claim 2, wherein the random sampling criteria is the Systematic Uniform Random Sampling (SURS).

4. Method according to claim 3, further comprising calculating an accumulated weight Z for all sectors, selecting a sample size n, and setting the SURS period for sampling to Z/n.

5. Method according to claim 4, further comprising the step of arranging the sectors for sampling in accordance with the Smooth Fractionator based on the weights of the sectors, optionally, before calculating the accumulated weight Z.

6. Method according to claim 4 or 5, further comprising giving non-uniform sampling probability $p_i$ to each sector, wherein $p_i$ is equal to the weight factor $z_i$ divided by the SURS period Z/n.

7. Method according to claim 6, further comprising sampling the subset of sectors by using SURS on the accumulated weight factors $z_i$ in order to sample the sectors according to their probability.

8. Method according to claim 6 or 7, further comprising using the Horvitz-Thompson estimator with summing $x_i/p_i$ for the subset of sectors for estimating the image analysis features, for example total number or the total amount, of objects.

9. Method according to any preceding claim, wherein the criteria for specific types of image analysis features is at least one from the group of colour criteria, morphology criteria and contextual criteria.

10. Method according to any preceding claim, wherein an efficiency of the method relative to simple random sampling is computed automatically from the sample of sectors based on their known sampling probability *zi* and known content *xi.*

11. Method according to any preceding claim, wherein those sectors that are analysed automatically for image features positively related to the objects to be quantified are a statistically uniform subsample with a known probability of the large total number of sectors in the image.

12. Method according to any one of the preceding claims, wherein the image is an aggregate of many images of a larger region.

13. Method according to any one of the preceding claims, wherein the image is a two-dimensional map of information in an invisible part of the spectra of radiation.

14. Method according to any preceding claim, wherein the object is an anatomical structure.

15. Method according to claim 14, where the method implies determining the objects, for example counting or measuring the objects, by using stereology including the use of a physical dissector principle relying on two thin serial sections of a tissue sample or images thereof.

16. Method according to any one of the preceding claims, wherein the image is a microscopy image.

17. Method according to claim 16, wherein the method comprises obtaining the microscopy image by use of a virtual microscope or a scanning microscope.

18. Method according to claim 16, wherein the method implies taking a microscopy image of a histological tissue section or of a cytological cell spread specimen.

**Patentansprüche**

1. Verfahren zur unvorbetonten Schätzung der Anzahl, Mengen, Volumen, Länge, Umfang und/oder Oberflächenraum von einem Objekt oder Objekten in einem Bild, wobei das Verfahren die Schritte aufweist:

   - Bereitstellen eines Bildes mit erkennbaren Bildanalysemerkmalen, die die Objekte angeben,
   - durch Bildanalyse Aufteilen des Bildes in eine Mehrzahl von Sektoren und Auswählen einer Untermenge der Mehrzahl von Sektoren durch Abtasten, wodurch die Anzahl der ausgewählten Sektoren geringer ist als die Anzahl der Mehrzahl von Sektoren,
   - Bestimmen der erkennbaren Bildanalysemerkmale, die Objekte für jeden der ausgewählten Sektoren angeben, und
   - Berechnen einer unvorbetonten Schätzung von Objekten in dem Bild, basierend auf dem Ergebnis der Bestimmung der erkennbaren Bildanalysemerkmale-Objekte in den ausgewählten Sektoren,
   - wobei das Abtasten der Untermenge an Sektoren in Übereinstimmung mit einem Zufallsabtastkriterium durchgeführt wird,
   **dadurch gekennzeichnet, dass**
   - das Abtasten gemäß einem Zufallserkennungskriterium durchgeführt wird, unter Verwendung einer nicht einheitlichen Wahrscheinlichkeit, die auf die Wahrscheinlichkeit von Objektpräsenz in einem Sektor positiv bezogen ist.

2. Verfahren nach Anspruch 1, wobei das Verfahren aufweist:

   - Definieren von Kriterien für spezielle Typen von Bildanalysemerkmalen, wobei die Bildanalysemerkmale bezeichnend für die Objekte sind,
   - durch computerisierte Bildanalyse, automatisches Analysieren der Sektoren bezüglich des definierten Kriteriums und Übertragen eines numerischen Gewichtsfaktors $z_i$ auf einen jeden analysierten Sektor, wobei der Gewichtsfaktor positiv bezogen wird, beispielsweise proportional, auf Bildanalysemerkmale, beispielsweise die gesamte Anzahl oder die gesamte Menge von erfassbaren Merkmalen,
   - Abtasten einer Anzahl von Sektoren gemäß eines Zufallsabtastkriteriums, wobei die Wahrscheinlichkeit des Abtastens eines speziellen Sektors proportional ist zu dem Gewichtsfaktor $z_i$ für den speziellen Sektor.

3. Verfahren nach Anspruch 2, wobei das Zufallsabtastkriterium das systematische einheitliche Zufallsabtasten (SURS) ist.

4. Verfahren nach Anspruch 3, welches weiterhin das Berechnen eines akkumulierten Gewichts Z für alle Sektoren, das Auswählen einer Probengröße n und das Setzen der SURS-Periode zum Abtasten auf Z/n aufweist.

5. Verfahren nach Anspruch 4, das weiterhin den Schritt des Anordnens der Sektoren zum Abtasten gemäß dem Smooth Fractionator aufweist, basierend auf den Gewichten der Sektoren, optional, vor dem Berechnen des akkumulierten Gewichts Z.

6. Verfahren nach Anspruch 4 oder 5, das weiterhin das Daraufgeben einer nicht einheitlichen Abtastwahrscheinlichkeit $p_i$ auf jeden Sektor aufweist, wobei $p_i$ gleich dem Gewichtsfaktor $z_i$ geteilt durch die SURS-Periode Z/n ist.

7. Verfahren nach Anspruch 6, das weiterhin das Abtasten der Untermenge von Sektoren durch Verwendung von SURS auf die akkumulierten Gewichtsfaktoren $z_i$ aufweist, um die Sektoren gemäß ihrer Wahrscheinlichkeit abzutasten.

8. Verfahren nach Anspruch 6 oder 7, weiterhin aufweisend die Verwendung des Horvitz-Thompson-Schätzers durch Summieren $x_i/p_i$ für die Untermenge von Sektoren zum Schätzen der Bildanalysemerkmale, beispielsweise der Gesamtzahl und der Gesamtmenge von Objekten.

9. Verfahren nach einem der vorhergehenden Ansprüche, wobei das Kriterium für bestimmte Typen von Bildanalysemerkmalen wenigstens eines aus der Gruppe des Farbkriteriums, des Morphologiekriteriums und des kontextabhängigen Kriteriums ist.

10. Verfahren nach einem der vorhergehenden Ansprüche, wobei eine Effektivität des Verfahrens bezogen auf die einfache Zufallsabtastung automatisch aus der Sektorenprobe, basierend auf deren bekannter Abtastwahrscheinlichkeit *zi* und dem bekannten Inhalt *xi* berechnet wird.

11. Verfahren nach einem der vorhergehenden Ansprüche, wobei jene Sektoren, die automatisch nach Bildmerkmalen analysiert werden, die positiv auf die Objekte, die quantifiziert werden sollen, bezogen werden, statistisch einheitliche Unterproben sind, mit einer bekannten Wahrscheinlichkeit der großen Gesamtanzahl von Sektoren in dem Bild.

12. Verfahren nach einem der vorhergehenden Ansprüche, wobei das Bild eine Ansammlung von vielen Bildern eines größeren Bereiches ist.

13. Verfahren nach einem der vorhergehenden Ansprüche, wobei das Bild eine zweidimensionale Karte an Information in einem unsichtbaren Teil der Bestrahlungsspektren ist.

14. Verfahren nach einem der vorhergehenden Ansprüche, wobei das Objekt eine anatomische Struktur ist.

15. Verfahren nach Anspruch 14, wobei das Verfahren das Bestimmen von Objekten impliziert, beispielsweise Zählen und Messen der Objekte, durch Verwendung von Stereologie, eingeschlossen die Verwendung eines physikalischen Zergliederungsmechanismus, der auf zwei dünnen seriellen Abschnitten einer Gewebeprobe oder eines Bildes davon beruht.

16. Verfahren nach einem der vorhergehenden Ansprüche, wobei das Bild ein Mikroskop-Bild ist.

17. Verfahren nach Anspruch 16, wobei das Verfahren das Erhalten des Mikroskop-Bildes durch Verwendung eines virtuellen Mikroskops oder eines Abtastmikroskops umfasst.

18. Verfahren nach Anspruch 16, wobei das Verfahren das Aufgreifen eines histologischen Gewebeabschnitts oder einer zytologischen Zellverteilungsprobe impliziert.

**Revendications**

1. Procédé pour une estimation non biaisée de nombres, de quantités, de volume, de longueur, de périmètres, et/ou de superficies d'objets dans une image, le procédé comprenant les étapes consistant à

- fournir une image avec des caractéristiques d'analyse d'image discernables indiquant les objets,
- découper, par l'analyse d'image, l'image en une pluralité de secteurs et sélectionner un sous-ensemble de la pluralité de secteurs par échantillonnage, dans lequel le nombre des secteurs sélectionnés est inférieur au nombre de la pluralité de secteurs,
- déterminer les caractéristiques d'analyse d'image discernables indiquant des objets pour chacun des secteurs

**18**

sélectionnés, et
- calculer une estimation non biaisée pour des objets dans l'image sur la base du résultat de la détermination des objets à caractéristiques d'analyse d'image discernables dans les secteurs sélectionnés,
- l'échantillonnage du sous-ensemble de secteurs est effectué conformément à un critère d'échantillonnage aléatoire
**caractérisé en ce que**
- l'échantillonnage est effectué conformément à un critère d'échantillonnage aléatoire en utilisant une probabilité non uniforme qui est liée positivement à la vraisemblance de la présence d'objet dans un secteur.

2. Procédé selon la revendication 1, dans lequel le procédé comprend

- la définition de critères pour des types spécifiques de caractéristiques d'analyse d'image, les caractéristiques d'analyse d'image étant indicatives des objets,
- l'analyse automatique, par une analyse d'image informatisée, des secteurs relativement aux critères définis et l'attribution d'un facteur de pondération numérique $z_i$ à chaque secteur analysé, le facteur de pondération étant lié positivement, par exemple proportionnel, à des caractéristiques d'analyse d'image, par exemple le nombre total ou la quantité totale, de caractéristiques détectables,
- l'échantillonnage d'un nombre de secteurs selon un critère d'échantillonnage aléatoire, dans lequel la probabilité pour l'échantillonnage d'un secteur spécifique est proportionnelle au facteur de pondération $z_i$ pour le secteur spécifique.

3. Procédé selon la revendication 2, dans lequel le critère d'échantillonnage aléatoire est l'échantillonnage aléatoire uniforme systématique (SURS, Systematic Uniform Random Sampling).

4. Procédé selon la revendication 3, comprenant en outre le calcul d'un poids cumulé Z pour tous les secteurs, la sélection d'une taille d'échantillon n, et l'établissement de la période de SURS pour l'échantillonnage à Z/n.

5. Procédé selon la revendication 4, comprenant en outre l'étape consistant à agencer les secteurs pour l'échantillonnage conformément au fractionnateur lisse sur la base des poids des secteurs, facultativement, avant le calcul du poids cumulé Z.

6. Procédé selon la revendication 4 ou 5, comprenant en outre le fait de donner une probabilité d'échantillonnage non uniforme $p_i$ à chaque secteur, dans lequel $p_i$ est égal au facteur de pondération $z_i$ divisé par la période de SURS Z/n.

7. Procédé selon la revendication 6, comprenant en outre l'échantillonnage du sous-ensemble de secteurs en utilisant le SURS sur les facteurs de pondération cumulés $z_i$ afin d'échantillonner les secteurs selon leur probabilité.

8. Procédé selon la revendication 6 ou 7, comprenant en outre l'utilisation de l'estimateur de Horvitz-Thompson avec l'addition $x_i/p_i$ pour le sous-ensemble de secteurs pour estimer les caractéristiques d'analyse d'image, par exemple le nombre total ou la quantité totale, d'objets.

9. Procédé selon l'une quelconque des revendications précédentes, dans lequel les critères pour des types spécifiques de caractéristiques d'analyse d'image sont au moins un du groupe de critères de couleur, de critères de morphologie et de critères contextuels.

10. Procédé selon l'une quelconque des revendications précédentes, dans lequel une efficacité du procédé qui se rapporte à un échantillonnage aléatoire simple est calculée automatiquement à partir de l'échantillon de secteurs sur la base de leur probabilité d'échantillonnage connue zi et de leur contenu connu xi.

11. Procédé selon l'une quelconque des revendications précédentes, dans lequel les secteurs qui sont analysés automatiquement pour des caractéristiques d'image liées positivement aux objets à quantifier sont un sous-échantillon statistiquement uniforme avec une probabilité connue du grand nombre total de secteurs dans l'image.

12. Procédé selon l'une quelconque des revendications précédentes, dans lequel l'image est un agrégat de nombreuses images d'une région plus grande.

13. Procédé selon l'une quelconque des revendications précédentes, dans lequel l'image est une carte d'information bidimensionnelle dans une partie invisible des spectres de rayonnement.

**14.** Procédé selon l'une quelconque des revendications précédentes, dans lequel l'objet est une structure anatomique.

**15.** Procédé selon la revendication 14, dans lequel le procédé implique la détermination des objets, par exemple le comptage ou la mesure des objets, en utilisant la stéréologie comprenant l'utilisation d'un principe de dissecteur physique reposant sur deux coupes en série minces d'un échantillon de tissu ou d'images de celui-ci.

**16.** Procédé selon l'une quelconque des revendications précédentes, dans lequel l'image est une image de microscopie.

**17.** Procédé selon la revendication 16, dans lequel le procédé comprend l'obtention de l'image de microscopie au moyen d'un microscope virtuel ou d'un microscope à balayage.

**18.** Procédé selon la revendication 16, dans lequel le procédé implique la prise d'une image de microscopie d'une coupe de tissu histologique ou d'un spécimen d'étalement de cellules cytologique.

FIG. 1

Accumulated Weight

Item Sequence

FIG. 2

FIG. 3

FIG. 4

FIG. 5

FIG. 6a

Count Per Frame

FIG. 6b

Weight

FIG. 6c

FIG. 7a

Count Per Frame

FIG. 7b

Weight

FIG. 7c

FIG. 8a

Count Per Frame

FIG. 8b

Weight

FIG. 8c

FIG. 9a

Count Per Frame

FIG. 9b

Weight

FIG. 9c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 526197 A

**Non-patent literature cited in the description**

- **BISCHOF, H. ; WILDENAUER, H. ; LEONARDIS, A.** Illumination insensitive recognition using eigenspaces. *Computer Vision and Image Understanding,* 2004, vol. 95, 86-104
- **BURDAKOV, D. ; JENSEN, L. T. ; ALEXOPOULOS, H. ; WILLIAMS, R. H. ; FEARON, I. M. ; O'KELLY, I. ; GERASIMENKO, O. ; FUGGER, L. ; VERKHRATSKY, A.** Tandem-Pore K+ Channels Mediate Inhibition of Orexin Neurons by Glucose. *Neuron,* 2006, vol. 50, 711-722
- **DORPH-PETERSEN, K.-A. ; LUNDERSEN, H.J.G ; JENSEN, E.B.V.** Non-uniform systematic sampling in stereology. *J. Microsc.,* 2000, vol. 200, 148-157
- **DORPH-PETERSEN, K. A. ; NYENGAARD, J. R. ; GUNDERSEN, H. J.** Tissue shrinkage and unbiased stereological estimation of particle number and size. *J.Microsc.,* 2001, vol. 204, 232-246
- **GARDI, J.. E. ; NYENGAARD, J. R. ; GUNDERSEN, H. J. G.** Using biased image analysis for improving unbiased stereological number estimation - a pilot simulation study of the smooth fractionator. *J.Microsc.,* 2006, vol. 222, 242-250
- **GONZALEZ, R. C. ; WOODS, R. E.** Digital image processing. Prentice-Hall, 2002
- **GUNDERSEN, H. J.** Notes on the estimation of the numerical density of arbitrary particles: the edge effect. *J.Microsc.,* 1977, vol. 111, 219-233
- **GUNDERSEN, H. J.** The smooth fractionator. *J.Microsc.,* 2002, vol. 207, 191-210
- **GUNDERSEN, H. J. ; JENSEN, E. B.** The efficiency of systematic sampling in stereology and its prediction. *J.Microsc.,* 1987, vol. 147, 229-263
- **GUNDERSEN, H. J. ; JENSEN, E. B. ; KIEU, K. ; NIELSEN, J.** The efficiency of systematic sampling in stereology--reconsidered. *J.Microsc.,* 1999, vol. 193, 199-211
- **HANSEN, M. M. ; HURWITZ, W. N.** On the theory of sampling from finite populations. *Anneals of Mathematical Statistics,* 1943, vol. 14, 333-362
- **HORVITZ, D. G. ; THOMPSON, D. J.** A Generalization of Sampling Without Replacement from A Finite Universe. *Journal of the American Statistical Association,* 1952, vol. 47, 663-685
- **JONASSON, L. ; HAGMANN, P. ; POLLO, C. ; BRESSON, X. ; RICHERO WILSON, C. ; MEULI, R. ; KIEU, K. ; SOUCHET, S. ; ISTAS, J.** Precision of systematic sampling and transitive methods. *Journal of Statistical Planning and Inference,* 1999, vol. 77, 263-279
- **KROUSTRUP, J. P ; GUNDERSEN, H. J.** Sampling problems in an heterogeneous organ: quantitation of relative and total volume of pancreatic islets by light microscopy. *J.Microsc.,* 1983, vol. 132, 43-55
- **LARSEN, J. O. ; BRAENDGAARD, H.** Structural preservation of cerebellar granule cells following neurointoxication with methyl mercury: a stereological study of the rat cerebellum. *Acta Neuropathol.(Berl),* 1995, vol. 90, 251-256
- **NYENGAARD, J. R. ; GUNDERSEN, H. J. G.** The isector: a simple and direct method for generating isotropic, uniform random sections from small specimens. *J.Microsc.,* 1992, vol. 165, 427-431
- **OSADCHY, M. ; KEREN, D.** Efficient detection under varying illumination conditions and image plane rotations. *Computer Vision and Image Understanding,* 2004, vol. 93, 245-259
- **PYDIPATI, R. ; BURKS, T. F. ; LEE, W. S.** Identification of citrus disease using color texture features and discriminant analysis. *Computers and Electronics in Agriculture,* 2006, vol. 52, 49-59
- **SAHOO, P. K. ; SOLTANI, S. ; WONG, A. K. C.** A survey of thresholding techniques. *Computer Vision, Graphics, and Image Processing,* 1988, vol. 41, 233-260
- **SKARBEK W. ; KOSCHAN A.** Colour image segmentation - A survey. *Technisher Bericht,* 1994, 32-94
- **WANG, Y. G. ; YANG, J. ; CHANG, Y. C.** Color-texture image segmentation by integrating directional operators into JSEG method. *Pattern Recognition Letters,* 2006, vol. 27, 1983-1990
- **WEST, M. J. ; SLOMIANKA, L. ; GUNDERSEN, H. J.** Unbiased stereological estimation of the total number of neurons in thesubdivisions of the rat hippocampus using the optical fractionator. *Anat.Rec.,* 1991, vol. 231, 482-497